# FASCICULE DE BREVET EUROPEEN

(11) **EP 1 976 888 B1**
(45) Date de publication et mention de la délivrance du brevet: **13.06.2012**
(21) Numéro de dépôt: 07712092.1
(22) Date de dépôt: 24.01.2007
(51) Int. Cl.: C08F 2/38, C08F 30/02, C08F 293/00

(54) **PROCEDE DE PREPARATION PAR POLYMERISATION PAR TRANSFERT D'IODE D'UN COPOLYMERE A ARCHITECTURE CONTROLEE DE TYPE TELOMERE OU DE COPOLYMERE A BLOC ISSU DE MONOMERES VINYL PHOSPHONATE**
VERFAHREN ZUR HERSTELLUNG EINES COPOLYMERS MIT KONTROLLIERTER ARCHITEKTUR VOM TELOMER- ODER BLOCKCOPOLYMER-TYP, ERHALTEN AUS VINYLPHOSPHONATMONOMEREN DURCH IODTRANSFERPOLYMERISATION
PROCESS FOR PREPARING A COPOLYMER WITH CONTROLLED ARCHITECTURE, OF TELOMER OR BLOCK COPOLYMER TYPE, OBTAINED FROM VINYL PHOSPHONATE MONOMERS, BY IODINE TRANSFER POLYMERIZATION

(30) Priorité: 26.01.2006 FR 0600715
(43) Date de publication de la demande: 08.10.2008
(73) Titulaire: Rhodia Opérations, 93306 Aubervilliers (FR); Centre National de la Recherche Scientifique, 75016 Paris (FR)
(72) Inventeur: DESTARAC, Mathias, F-75005 Paris (FR); BOUTEVIN, Bernard, F-34070 Montpellier (FR); DAVID, Ghislain, F-34070 Montpellier (FR); OTTER, Graham, Bromsgrove 861 OP8 (GB); WOODWARD, Gary, Northwich CW9 5QR (GB)
(74) Mandataire: Neyret, Daniel Jean Marie
(86) Numéro de dépôt international: PCT/EP2007/050704
(87) Numéro de publication internationale: WO 2007/085623

(56) Documents cités:
- EP-A- 0 947 527
- WO-A-03/076529
- GAYNOR S G ET AL: "CONTROLLED RADICAL POLYMERIZATION BY DEGENERATIVE TRANSFER: EFFECT OF THE STRUCTURE OF THE TRANSFER AGENT" MACROMOLECULES, ACS, WASHINGTON, DC, US, vol. 28, no. 24, 20 novembre 1995 (1995-11-20), pages 8051-8056, XP000539430 ISSN: 0024-9297 cité dans la demande

## Description

La présente invention a pour objet un procédé de synthèse d'un copolymère à architecture contrôlée comprenant au moins un bloc A obtenu par la polymérisation de type ITP d'un mélange de monomères à insaturation éthylénique (A₀) ne comprenant pas de monomères à fonctions vinyl phosphonate et au moins un bloc B obtenu par la polymérisation d'un mélange de monomères à insaturation éthylénique (B₀) comprenant au moins un monomère B₁ portant au moins une fonction vinyl phosphonate.

La présente invention a également pour objet un procédé de synthèse d'un copolymère à architecture contrôlée de type télomère comprenant au moins une chaîne B obtenu par la polymérisation d'un mélange de monomères à insaturation éthylénique (B₀) comprenant au moins un monomère B₁ portant au moins une fonction vinyl phosphonate par polymérisation de type ITP, ainsi que le télomère susceptible d'être obtenu et ses utilisations.

Selon la présente invention les copolymères à architectures contrôlées désignent les copolymères à blocs, tels les diblocs et les triblocs, les copolymères greffés, les copolymères étoilés, les microgels ou les copolymères à blocs ramifiés comportant un coeur microgel à densité de réticulation variable et contrôlée (tels que décrits dans la demande M. Destarac, B. Bavouzet, D. Taton. WO 2004014535, Rhodia Chimie), ainsi que les télomères, c'est-à-dire des polymères à fonctionnalité terminale contrôlée.

Par monomère à fonction vinyl phosphonate, on entend au sens de la présente invention, un monomère qui comprend au moins une fonction acide vinyl phosphonique ou un analogue alkyl ester.

On peut citer notamment parmi les monomères à fonction vinyl phosphonate, les composés de formule (I) suivante : 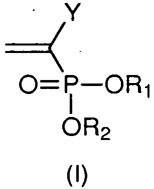 dans laquelle :
- Y représente un radical choisi parmi un atome d'hydrogène, un radical alkyle ayant de 1 à 6 atomes de carbone, un cyano, un radical phényle, un radical ester de formule
- COOR₃, un radical acétate de formule -OCOR'₃, un acide phosphonique ou un ester méthylique, éthylique ou isopropylique d'acide phosphonique;
- R₃, R'₃, identiques ou différents représentent un radical alkyle ayant de 1 à 12 atomes de carbone, et de préférence un radical alkyle ayant de 1 à 6 atomes de carbone;
- R₁, R₂, identiques ou différents représentent un atome d'hydrogène, ou un radical alkyle ayant de 1 à 6 atomes de carbone éventuellement substitué par un atome d'halogène ;
par atome d'halogène on entend le chlore, le fluor, le brome, ou l'iode. De préférence on utilise le chlore.

Les blocs ou les chaînes selon l'invention peuvent être des homopolymères, des copolymères statistiques, des copolymères alternés ou des copolymères à gradient de composition.

Une des approches technologiques de choix permettant de synthétiser des copolymères à architectures contrôlées est la polymérisation radicalaire dite « vivante » ou contrôlée.

Les copolymères à architectures contrôlées sont utiles dans diverses industries, notamment comme agents dispersants, émulsifiants, texturants ou modificateur de surface.

Par ailleurs, les (co)polymères portant des fonctions acide phosphonique sont développés industriellement pour leurs fonctions particulières dans des domaines variés tels que les agents d'ignifugation, anti-tartre, inhibiteurs de corrosion, promoteurs d'adhésion, ou dispersants de pigments.

Ainsi, il apparaît que la synthèse de copolymères à architectures complexes portant des fonctions phosphonate PO₃R₁R₂, et en particulier des fonctions acide phosphonique PO₃H₂, représente un challenge industriel très important.

C'est également un challenge technique de taille à relever, et ceci pour deux raisons principales :
- tout d'abord, la gamme de monomères industriels porteurs de fonction phosphonate PO₃R₁R₂ est très limitée. La plupart sont des monomères vinyliques, comme l'acide vinyl phosphonique, le diméthyl ester de l'acide vinyl phosphonique, le bis(2-chloroéthyl) ester de l'acide vinyl phosphonique, l'acide vinylidène diphosphonique, le tetraisopropylester de l'acide vinylidène diphosphonique ;
- leur faible réactivité en polymérisation combinée à la fonctionnalité acide phosphonique ou phosphonate de certains des monomères listés a depuis toujours fortement compromis leur utilisation dans un procédé de polymérisation radicalaire « vivante » ou contrôlée.

C'est la raison pour laquelle, jusqu'à présent, la synthèse d'homopolymères ou de copolymères comprenant des monomères comprenant des fonctions phosphonate a été effectuée par voie radicalaire conventionnelle, c'est-à-dire par un mécanisme non contrôlé.

Les fonctions acide phosphonique PO₃H₂ sont souvent générées par l'hydrolyse des esters correspondants qui peuvent être apportés par un monomère [Boutevin, B. et coll. Polym. Bull. 1993, 30, 243] ou un agent de transfert [Boutevin, B. et coll. Macromol. Chem. Phys. 2002, 203, 1049] approprié pendant la polymérisation.

Très peu de travaux traitent de l'incorporation directe de fonctions PO₃H₂ dans les polymères. C'est par exemple le cas en polymérisant l'acide vinyl phosphonique, désigné ci-après par AVP, par amorçage radicalaire [Herwig, W; Duersch, W; Engelhardt, F. US 4,696,987] ou par copolymérisation statistique, par exemple avec l'acide méthacrylique [Riegel, U; Gohla, W; Grosse, J; Engelhardt, F. US 4,749,758]. Le document GB 2293605 décrit la polymérisation de l'AVP et sa copolymérisation statistique avec l'acide acrylique. De même R. Padda et al. [Phosphorus, Sulfur and Silicon and the Related Elements 2002, 177 (6-7), 1697] décrivent la copolymérisation statistique d'un monomère diphosphonique : l'acide vinylidène diphosphonique. Pour ce qui est des télomères, c'est-à-dire des polymères à terminaison de chaîne contrôlées, fonctionnalisés par PO₃H₂, Rhodia a développé une technologie permettant de synthétiser des polymères (par ex. polyacide acrylique (PAA)) à motif terminal diacide phosphonique di(PO₃H₂) [Davis et al. WO 2004078662].

Il apparaît que les polymères à fonctions phosphonate ou acide phosphonique les plus couramment décrits sont des homopolymères, des copolymères statistiques voire des télomères fonctionnalisés acide phosphonique en leur extrémité, ces polymères étant obtenus par voie radicalaire conventionnelle, c'est-à-dire par un mécanisme non contrôlé.

Parmi les principales techniques de polymérisation radicalaire « vivante » ou contrôlée, citons la polymérisation radicalaire par transfert d'atome (ATRP), la polymérisation radicalaire contrôlée par les radicaux stables de type nitroxyle (NMP), la polymérisation par transfert réversible par addition-fragmentation (RAFT), et la polymérisation par transfert dégénératif d'iode (ITP).

Cependant, pour l'ATRP, les motifs acide phosphonique et les analogues ester des monomères vinyliques et/ou des polymères formés ont tendance à interagir fortement avec les catalyseurs (Cu, Ru, Fe, Ni) d'ATRP, ce qui compromet le contrôle de cette polymérisation.

Pour la polymérisation NMP, le faible niveau de stabilisation des radicaux issus des monomères acide vinyl phosphonique ou de leurs analogues ester rend la polymérisation de ces monomères difficilement compatible avec cette technique.

Dans le cas où la polymérisation est de type RAFT, et en particulier lorsque l'agent de transfert RAFT est un xanthate, procédé alors appelé MADIX pour Macromolecular Design via the Interchange of Xanthates, l'AVP a été copolymérisé statistiquement avec l'acide acrylique. Des copolymères double hydrophile P(Acrylamide)-b-P(AA-stat-AVP) ont été synthétisés comme décrit dans le document [M. Destarac, D. Taton, « Direct access to Phosphonic Acid-Containing Block Copolymers via MADIX » 40ème symposium international sur les macromolécules, MACRO 2004, Paris]. Des copolymères amphiphiles P(ABu)-b-P(AA-stat-AVP) ont été synthétisés comme décrit dans les documents WO 2003076529 et WO 2003076531.

Cependant, il est important de noter que dans tous les cas de polymérisation MADIX décrits ci-dessus, le taux d'incorporation de l'AVP dans un bloc ne dépassait pas 25% en mole.

Dans la littérature académique, la polymérisation radicalaire contrôlée par transfert d'iode (ITP) ou encore par transfert dégénératif (DT) a été décrite par M. Tatemoto dans « Development of Iodine Transfer Polymerization and its applications to telechelically reactive polymers », Kobunshi Robunshu, vol. 49, n°10, pp. 765-783 (1992). Dans ce procédé, un atome d'iode terminal - en bout de chaîne - peut être transféré de manière réversible d'une extrémité de chaîne à un radical en croissance d'une autre chaîne pendant la polymérisation. Les agents de transfert couramment mis en oeuvre sont des iodures d'alkyle ou de perfluoroalkyle.

Pour le cas du styrène et des acrylates, on peut citer les travaux de Gaynor et coll. dans Macromolécules, 28, 8051-8056 (1995). D'autres exemples de polymérisation des monomères styrèniques par ITP sont disponibles dans les références Macromolécules, 33(9), 3485 (2000), Macromolécules, 32(22), 7354 (1999), et Macromolécules, 31(9), 2809 (1998). La synthèse de copolymères à blocs à base de styrène et d'acrylates par ITP a été décrite dans les références Macromolécules, 28, 2093 (1995) et Macromol. Rapid Commun. 2000, 21 (13), 921.

L'ITP de l'acétate de vinyle a été étudiée par lovu et coll. dans Macromolécules 2003, 36(25), 9346-9354.

Lacroix-Desmazes et coll. dans ACS Symposium Series 854, 570-585 (2003) ont étudié la polymérisation ITP du chlorure de vinylidène et synthétisé les copolymères à blocs correspondant. Ces mêmes auteurs ont récemment décrit dans Macromolécules 2005, 38 (15), 6299 -6309 la polymérisation radicalaire des acrylates à l'aide d'iode moléculaire l₂, nommant par la même ce procédé *reverse ITP* ou *RITP.*

Les documents EP 0489370 et US 5,439,980 de Daikin Industries décrivent la synthèse de copolymères à blocs par transfert réversible d'iode.

Les documents EP 272698 et EP 0501532 de Daikin Industries décrivent la polymérisation par ITP de monomères fluorés pour accéder à des copolymères à blocs fluorés.

Les documents EP 0617057, EP 0974604 et US 5,455,319 de Geon Company traitent de la polymérisation ITP de monomères halogénés, notamment du chlorure de vinyle. Le document EP 0947527 de B.F. Goodrich Company décrit la polymérisation ITP en émulsion aqueuse pour accéder notamment à des copolymères tri blocs ABC.

Le document WO 03/097704 de la société Solvay décrit la polymérisation par transfert d'iode de compositions de monomères halogénés pour certains, en présence d'iode moléculaire I₂ comme agent de transfert.

Le document WO 2004/009648 de la société Akzo Nobel décrit la synthèse de copolymères à architectures contrôlées par polymérisation par transfert d'iode, pour lesquels une des séquences est riche en monomères méthacrylates.

Dans le document WO 2004/009644 de la société Akzo Nobel, l'iode moléculaire I₂ est mis en oeuvre pour contrôler la polymérisation d'une composition méthacrylique comprenant au moins une fonction réticulable.

Ainsi, aucun des documents précédemment cités concernant la polymérisation contrôlée par transfert d'iode (ITP) ne décrit la mise en oeuvre d'un monomère à fonction acide vinyl phosphonate.

Le besoin existait d'arriver à synthétiser des polymères à blocs dont un des blocs à une composition élevée en monomère à fonction vinyl phosphonate.

En effet le monomère vinyl phosphonate est un monomère peu réactif, en général beaucoup plus onéreux que les comonomères qui l'accompagnent dans le mélange réactionnel. Le fait d'être capable de le localiser à volonté dans une partie précise du polymère devrait permettre d'en utiliser moins pour atteindre la propriété visée, et donc de diminuer les coûts.

De plus le fait d'avoir plusieurs motifs vinyl phosphonate consécutifs dans un polymère devrait permettre d'apporter des propriétés intéressantes en particulier lorsque on utilise les polymères ainsi obtenus comme agents anti-tartres.

Un des buts de la présente invention est de trouver un moyen de synthétiser des copolymères à architectures contrôlées comprenant au moins une séquence à base de monomères portant des fonctions vinyl phosphonate en composition élevée en fonctions vinyl phosphonate.

Ce but et d'autres ont été atteints par la Demanderesse en utilisant un procédé particulier de polymérisation radicalaire de type à transfert d'atome d'iode (ITP).

En effet, c'est grâce à la maîtrise des conditions réactionnelles, en terme de concentration du milieu réactionnel, et les conditions de température et de concentration en amorceur et la nature et la concentration de l'agent de transfert iodé que la demanderesse a pu obtenir des polymères à architecture contrôlée comprenant des séquences riches en monomère vinylphosphonate.

La présente invention a donc pour objet un procédé de synthèse d'un copolymère à architecture contrôlée comprenant au moins un bloc A obtenu par la polymérisation d'un mélange de monomères à insaturation éthylénique (A₀) ne comprenant pas de monomères à fonctions vinyl phosphonate et au moins un bloc B obtenu par la polymérisation d'un mélange de monomères à insaturation éthylénique (B₀) comprenant au moins un monomère B₁ portant au moins une fonction vinyl phosphonate comprenant les étapes suivantes :
(a) on réalise une polymérisation radicalaire menant à l'obtention d'un polymère fonctionnalisé en son extrémité par un atome d'iode utile à titre d'agent de transfert dans une réaction de polymérisation radicalaire contrôlée, ladite étape étant conduite en mettant en contact :
   - des molécules monomères éthyléniquement insaturées,
   - une source de radicaux libres, et
   au moins un agent de transfert iodé
(b) on réalise, suite à l'étape (a), une étape de polymérisation radicalaire, ou plusieurs étapes successives de polymérisations radicalaires, ladite ou lesdites étape(s) consistant chacune à effectuer une polymérisation radicalaire menant à l'obtention d'un copolymère à blocs fonctionnalisé en son extrémité par un atome d'iode utile à titre d'agent de transfert dans une réaction de polymérisation radicalaire, ladite ou lesdites étapes étant conduite(s) en mettant en contact :
   - des molécules monomères éthyléniquement insaturées dont au moins une est différente de celles mis en oeuvre dans l'étape précédente,
   - une source de radicaux libres, et
   le polymère fonctionnalisé issu de l'étape précédente ;
   étant entendu que l'une des étapes de polymérisation (a) et (b) définies ci-dessus conduit à la formation du bloc B, c'est à dire du bloc comprenant les fonctions vinyl phosphonate et qu'une autre des étapes de polymérisation des étapes (a) et (b) conduit à la formation d'un autre bloc, en l'occurrence le bloc A, les monomères éthyléniquement insaturés mis en oeuvre dans les étapes (a) et (b) étant choisis parmi les monomères adaptés pour obtenir un copolymère à architecture contrôlée tel que défini précédemment.

La présente invention a également pour objet un procédé de synthèse d'un copolymère à architecture contrôlée de type télomère comprenant au moins une chaîne B obtenu par la polymérisation d'un mélange de monomères à insaturation éthylénique (B₀) comprenant au moins un monomère B₁ portant au moins une fonction vinyl phosphonate comprenant l'étape suivante :
on met en contact :
   - des molécules monomères éthyléniquement insaturées,
   - une source de radicaux libres, et
   au moins un agent de transfert iodé.

Le copolymère à architecture contrôlée peut être un copolymère à bloc (di ou triblocs), un copolymère greffé, un copolymère étoilé ou un microgel, comprenant au moins un bloc A et au moins un bloc B ainsi qu'un télomère comprenant une chaîne B.

Le bloc A, selon l'invention, est obtenu par la polymérisation d'un mélange de monomères à insaturation éthylénique (A₀) ne comprenant pas de monomères à fonctions vinyl phosphonate. Le bloc B est obtenu par la polymérisation d'un mélange de monomères à insaturation éthylénique (B₀) comprenant au moins un monomère B₁ portant une fonction vinyl phosphonate.

Les blocs selon l'invention peuvent être des homopolymères, des copolymères statistiques, des copolymères alternés ou des copolymères à gradient de composition.

Selon l'invention le rapport massique des blocs A et B varie entre 1/99 et 99/1.

Le bloc A est obtenu par la polymérisation d'un mélange de monomères (A₀) à insaturation éthylénique ne comprenant pas de monomères porteurs de fonction vinyl phosphonate. Le groupe (A₀) comprend les monomères hydrophiles (h) ou hydrophobes (H) choisis parmi les monomères suivants :
Parmi les monomères hydrophiles (h) on peut citer :
   - les acides mono- et di-carboxyliques insaturés éthyléniques tels que l'acide acrylique, l'acide méthacrylique, l'acide itaconique, l'acide maléique, ou l'acide fumarique et leurs dérivés tels que les mono-alkylesters de préférence avec des alcools en C₁-C₄, et les amides comme l'acrylamide, le méthacrylamide, ou
   - les monomères éthyléniques comprenant un groupe uréido tels que l'éthylène urée éthyl méthacrylamide, ou l'éthylène urée éthyl méthacrylate, ou
   - les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthylène-méthacrylate, ou
   - les monomères porteurs d'une fonction acide boronique tel que le p-vinylphényl acide boronique, ou
   - les monomères cationiques choisis parmi les (méth)acrylates d'aminoalkyle, les (méth)acrylamides d'aminoalkyle ; les monomères comprenant au moins une fonction amine secondaire, tertiaire ou quaternaire, ou un groupe hétérocyclique contenant un atome d'azote; les sels d'ammonium de diallyldialkyl ; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le diméthyl amino éthyl (méth)acrylate, diméthyl amino propyl (méth)acrylate le ditertiobutyl aminoéthyl (méth)acryfate, le diméthyl amino méthyl (méth)acrylamide, le diméthyl amino propyl (méth)acrylamide ; l'éthylène imine, la vinylamine, la 2-vinylpyridine, la 4-vinylpyridine ; le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle ; le chlorure d'ammonium de diallyldiméthyl seuls ou en mélanges, ou leurs sels correspondants, ou
   - les amides cycliques de la vinylamine, tel que le N-vinylpyrrolidone et le vinylcaprolactame,ou
   - l'alcoolpolyvinylique résultant de l'hydrolyse d'un polyacétate de vinyle par exemple, ou
   - plus généralement, les polymères hydrophiles provenant d'une modification chimique d'un bloc hydrophobe, par exemple par hydrolyse d'un polyacrylate d'alkyle en polyacide acrylique.

De préférence, les unités monomères hydrophiles (h) sont choisies parmi l'acide acrylique (AA), l'acrylamide (Am), l'acide 2-acrylamido-2-méthyl-propanesulfonique (AMPS), le sulfonate de styrène (SS), la N-vinylpyrrolidone, l'acide vinyl sulfonique (AVS), ou leurs mélanges et les unités alcool vinylique issues de l'hydrolyse du polyacétate de vinyle, ou leurs mélanges.

De manière encore plus préférentielle on utilise des unités d'acide acrylique (AA) ou l'alcool vinylique.

Parmi les monomères ayant un caractère hydrophobe (H) on peut citer :
- les monomères dérivés styréniques tels que le styrène, l'alphaméthylstyrène, le paraméthylstyrène ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle (VAc), le versatate de vinyle, ou le propionate de vinyle,
- les halogénures de vinyle ou de vinylidène, par exemple le chlorure de vinyle, le fluorure de vinyle, le chlorure de vinylidène et le fluorure de vinylidène, et
- les monomères diéniques, par exemple le butadiène ou l'isoprène.

De préférence, les unités monomères hydrophobes (H) des copolymères à architectures contrôlées de l'invention sont des esters de l'acide acrylique avec des alcools linéaires ou ramifiés en C1-C8, et en particulier en C1-C4, comme, par exemple, l'acrylate de méthyle, l'acrylate d'éthyle, l'acrylate de propyle, l'acrylate de butyle (Abu) ou l'acrylate de 2-éthylhexyle (A2EH), les acrylates fluorés, ou bien des dérivés styréniques tels que le styrène, ou l'acétate de vinyle (VAc),ou le chlorure de vinyle, ou le chorure de vinylidène, ou le fluorure de vinylidène.

Selon un mode préféré de l'invention le bloc A est le polyacide acrylique ou l'alcool polyvinylique.

Le polyacide acrylique peut être obtenu soit par polymérisation de monomère acide acrylique, soit par polymérisation d'un monomère de type acrylate d'alkyle tel que par exemple acrylate de méthyle ou de butyle suivi d'une hydrolyse.

L'alcool polyvinylique peut être obtenu par polymérisation d'acétate de vinyle suivi d'une hydrolyse.

Concernant le bloc B ou la chaîne B, il (ou elle) est obtenu(e) par la polymérisation d'un mélange de monomères (B₀) comprenant au moins un monomère B₁ portant au moins une fonction vinyl phosphonate, et éventuellement un monomère B₂ ne portant pas de fonction vinyl phosphonate choisi dans le groupe A₀ définit précédemment. De préférence, le bloc B ou la chaîne B est obtenu(e) par la polymérisation d'un mélange de monomères (B₀) comprenant,
- de 20 à 100% en mole d'au moins un monomère B₁ portant au moins une fonction vinyl phosphonate, et
- de 0 à 80% en mole d'au moins un monomère B₂ ne portant pas de fonction vinyl phosphonate choisi dans le groupe A₀ définit précédemment.

De manière encore plus préférée, le bloc B ou la chaîne B est obtenu(e) par la polymérisation d'un mélange de monomères (B₀) comprenant,
- de 50 à 100% en mole d'au moins un monomère B₁ portant au moins une fonction vinyl phosphonate, et
- de 0 à 50% en mole d'au moins un monomère B₂ ne portant pas de fonction vinyl phosphonate choisi dans le groupe A₀ définit précédemment.

Le monomère comprenant au moins une fonction vinyl phosphonate B₁ peut être un composé de formule (I) : 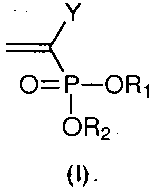 dans laquelle :
- Y représente un radical choisi parmi un atome d'hydrogène, un radical alkyle ayant de 1 à 6 atomes de carbone, un cyano, un radical phényle, un radical ester de formule
- COOR₃, un radical acétate de formule -OCOR'₃, un acide phosphonique ou un ester méthylique, éthylique ou isopropylique d'acide phosphonique;
- R₃,R'₃, identiques ou différents représentent un radical alkyle ayant de 1 à 12 atomes de carbone, et de préférence un radical alkyle ayant de 1 à 6 atomes de carbone;
- R1, R2, identiques ou différents représentent un atome d'hydrogène, ou un radical alkyle ayant de 1 à 6 atomes de carbone éventuellement substitué par un atome d'halogène ;
ou leurs mélanges,
étant entendu que lorsque le bloc B est obtenu par la polymérisation d'un mélange de monomères (B₀) comprenant de 50 à 100% en mole d'au moins un monomère B₁, et que B1 vérifie la formule (I) avec Y différent d'un atome d'hydrogène, alors le bloc B comprend également des monomères B1 dans lequel Y représente un atome d'hydrogène.

Par atome d'halogène on entend le chlore, le fluor, le brome,ou l'iode. De préférence on utilise le chlore.

Parmi les monomères B1 utiles dans la présente invention on peut citer notamment l'acide vinyl phosphonique, le diméthyl ester de l'acide vinyl phosphonique, le bis(2-chloroethyl) ester de l'acide vinyl phosphonique, l'acide vinylidène diphosphonique, le tetraisopropylester de l'acide vinylidène diphosphonique, ou l'acide alpha-styrène phosphonique, ou leurs mélanges.

Les monomères B1 à fonction mono ou diacide vinyl phosphonique peuvent être utilisés sous forme d'acide libre, ou sous forme de leurs sels. Ils peuvent être neutralisés, partiellement ou totalement, éventuellement par une amine par exemple la dicyclohexylamine.

Le monomère B₁ préféré selon l'invention est l'acide vinyl phosphonique.

Le monomère B₂ utile dans la présente invention peut être choisi parmi les monomères A₀ définis ci-dessus.

De préférence le monomère B₂ est choisi parmi l'acide acrylique, l'acrylamide, l'acide vinyl sulfonique, l'acétate de vinyle, l'acrylate de butyle ou leurs mélanges.

De manière encore plus préférée le monomère B₂ est l'acide acrylique.

En général les copolymères à architecture contrôlée présentent une masse moyenne en poids comprise entre 1000 et 100000. Le plus souvent entre 4000 et 50000. Ils présentent aussi un indice de polydispersité inférieur à 2,5, de préférence compris entre 1,3 et 2,5 et plus préférentiellement entre 1,3 et 2,0.

Le rapport massique entre blocs A et B est tel que B/(A+B) est de préférence compris entre 0,01 et 0,5, et de manière encore plus préférée comprise entre 0,02 et 0.2.

Lorsque le bloc B est obtenu par la polymérisation d'un mélange de monomères (B₀) comprenant de 50 à 100% en mole d'au moins un monomère B₁ portant au moins une fonction vinyl phosphonate, alors on se place de préférence dans les conditions suivantes :
- la concentration en monomère B₀ dans le milieu est telle que le taux de solide doit être supérieur à 50%, de préférence supérieur à 60% et de manière encore plus préférée supérieure à 70%, le taux de solide étant défini de la manière suivante :
   masse B₀/masse (B₀+ solvant) si B₀ est polymérisé en premier bloc,
   masse (A₀+B₀)/masse (A₀+ B₀+ solvant) si B₀ est polymérisé en second bloc ; et
- la concentration cumulée ou totale de l'amorceur est comprise entre 0.5 et 20% en mole par rapport au mélange de monomères B₀.

Les masses moléculaires du bloc B sont généralement inférieures à 10000, de préférence inférieures à 5000 et de manière encore plus préférées inférieures à 2000. La concentration en amorceur et le mode d'introduction de l'amorceur sont définis de façon à obtenir le bon compromis entre une conversion élevée en monomère B₀ et un taux de chaînes incontrôlées aussi faible que possible.

Ainsi on introduit l'amorceur en batch au début de la réaction, ou en spot, ou en continu ou semi -continu en mettant le monomère B₁ préférentiellement en pied de cuve de telle sorte que la concentration cumulée ou totale de l'amorceur soit comprise entre 0.5 et 20% en mole par rapport au mélange de monomères B₀.

Le taux de solide en monomère B₀ est élevé par rapport aux conditions habituelles dans lesquelles sont mis en oeuvre les procédés de polymérisation radicalaire contrôlée.

Enfin les masses moléculaires du bloc B ont également été définies de façon à bien contrôler la polymérisation.

Les agents de transfert iodés utiles au titre de l'invention possèdent tous au moins un groupement stabilisant du radical centré sur le carbone adjacent aux atomes d'iode. Ce groupement active les réactifs vis-à-vis du transfert d'iode et rend de ce fait efficaces les agents de transfert. Les agents de transfert iodés peuvent être classés en trois catégories :
i) monoiodés sans groupe fonctionnel de formule R-I (II)
ii) monoiodés avec un groupe fonctionnel de formule Z₂-R'-I (III)
iii) diiodés de formule I-R'-I (IV).

L'agent de transfert iodé utile pour la mise en oeuvre des procédés de l'invention peut être choisi parmi les composés réactifs monoiodés sans groupe fonctionnel de formule (II) suivante :

R-I (II)

dans laquelle,
R représente :
- un groupe alkyle, acyle, aryle, alcényle ou alcynyle,
- un cycle carboné, saturé ou non, éventuellement aromatique ;
- un hétérocycle, saturé ou non, éventuellement aromatique;
- une chaîne polymère ;
- un atome d'iode ; ou
- Hl₂C-
lorsque R est différent d'un atome d'iode ou du radical Hl₂C-, il comprend en outre au moins un groupement stabilisant du radical R et possède de 1 à 50 atomes de carbone, le polymère et le groupe stabilisant du radical étant liés au même atome de carbone dans R,

Le groupe stabilisant du radical R peut être aryle, alcène, ester, acide, amide, cétone, nitrile, halogène, isocyanate, nitro et amine.

Des exemples de groupes stabilisants des radicaux R sont C₆H₄CH₃, C₆H₅, (C=O)OCH₃, F, Cl et CN.

A titre d'exemples, citons parmi les composés R-I le 1-chloro-1-iodoéthane, le 1-fluoro-1-iodoéthane, 1-phényl-1-iodoéthane, le monoiodoperfluoroéthane, monoiodo-perfluoropropane, 2-iodoperfluorobutane, 1-iodoperfluorobutane, 1-iodoperfluoro(4-méthylbutane), 1-iodoperfluorohexane, 1-iodoperfluoro-n-nonane, monoiodoperfluorocyclohexane, monoiodotrifluorocyclobutane, monoiododifluorométhane, monoiodomonofluorométhane, 2-iodo-1-hydroperfluoroéthane, 3-iodo-1-hydroperfluoropropane, monoiodomonochloro-difluorométhane, monoiododichloromonofluoroéthane, 2-iodo-1,2-dichloro-1,1,2-trifluoroéthane, 4-iodo-1,2-dichloroperfluorobutane, 6-iodo-1,2-dichloroperfluorohexane, 4-iodo-1,2,4-trichloroperfluorobutane, 1-iodo-2,2-dihydroperfluoropropane, 1-iodo-2-hydroperfluoropropane, monoiodotrifluoroéthane, 3-iodoperfluoroprop-1-ène, 4-iodoperfluoropentène-1,4-iodo-5-chloropent-1 -ène, 2-iodoperfluoro(1-cyclbutenyl)éthane, 1-iodoperfluorodécane, 2-iodo-1,1,1-trifluoroéthane, 1-iodo-1-hydroperfluoro(2-méthyléthane), 2-iodo-2,2-dichloro-1,1,1-trifluoroéthane, 2-iodoperfluoroéthylperfluorovinyl éther, 2-iodoperfluoroéthylperfluoroisopropyl éther, 3-iodo-2-chloroperfluorobutylperfluorométhyl éther, le iodopentafluorocyclohexane, le iodoperfluorohexane, l'iodoacétonitrile, le methyl-2-iodopropionate, l'éthyl-2-iodopropionate ou l'iodure de benzyle.

Les agents R-I préférés sont le 1-iodoperfluorohexane (C₆F₁₃I), l'iodoacétonitrile (CNCH₂l), le methyl-2-iodopropionate (CH₃CH(CO₂CH₃)-I), le 1-phényl-1-iodoéthane (CH₃CH(C₆H₅)-l) et l'iodure de benzyle (C₆H₅CH₂-l).

L'agent de transfert iodé utile pour la mise en oeuvre du procédé de l'invention peut également être choisi parmi les composés monoiodés porteurs d'un groupe fonctionnel de formule (III) suivante :

Z₂-R'-I (III)

dans laquelle,
R' représente :
- un groupe alkylène, arylène,
- un cycle carboné, saturé ou non, éventuellement aromatique ;
- un hétérocycle, saturé ou non, éventuellement aromatique; ou
- une chaîne polymère ;
avec R', comme noté ci-dessus, comprenant au moins un groupement stabilisant du radical Z₂-R' et possède de 1 à 50 atomes de carbone, le polymère et le groupe stabilisant du radical étant liés au même atome de carbone dans Z₂-R' ;
le groupe stabilisant du radical R' peut être aryle, alcène, ester, acide, amide, cétone, nitrile, halogène, isocyanaté, nitro et amine ;

Des exemples de groupes stabilisants des radicaux Z₂-R' sont C₆H₄CH₃, C₆H₅, (C=O)OCH₃, F, Cl et CN.

Z₂ est sélectionné parmi les groupes OR_{1,} N(R₁)₂, SR₁, COOR₁, COOM, oléfine du type -CR₁=C(R₁)₂, époxy, SO₃M, P(O)(OR₁)₂, P(R₁)₃, isocyanate et CR₁=O, où R₁ est un atome d'hydrogène ou un groupe ayant de 1 à 20 atomes de carbone, R₁ étant identique ou différent pour tout Z₂ possédant plus de un R₁, et où M est un sel de métal alcalin tel qu'un sel de sodium ou de potassium.

Les agents de transfert Z₂-R'-I préférés sont l'acide 3-iodo-4-chloroperfluorobutyrique, l'iodure d'allyle ou encore le 1-iodo-lphényléthanol (IIIa) ou l'acide iodoacétique (IIIb) décrits ci-dessous :

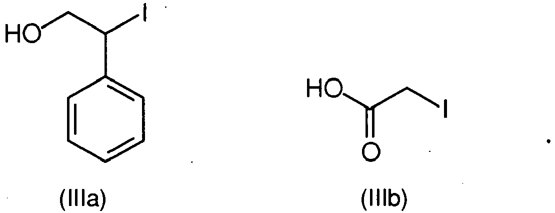

Les agents de transfert diiodés sans groupe fonctionnel sont de formule générale (IV) suivante :

I-R'-I (IV)

dans laquelle
R' représente :
- un groupe alkylène, arylène,
- un cycle carboné, saturé ou non, éventuellement aromatique ;
- un hétérocycle, saturé ou non, éventuellement aromatique; ou
- une chaîne polymère ;
avec R', comme noté précédemment, comprenant au moins un groupement stabilisant du radical R' et possède de 1 à 50 atomes de carbone, le polymère et le groupe stabilisant du radical étant liés au même atome de carbone dans R' ;
le groupe stabilisant du radical peut être aryle, alcène, ester, acide, amide, cétone, nitrile, halogène, isocyanate, nitro et amine.

Des exemples de groupes stabilisants des radicaux R' sont C₆H₄CH₃, C₆H₅, (C=O)OCH₃, F, Cl et CN.

A titre d'exemples, citons parmi les composés I-R'-I le 1,3-diiodoperfluoro-n-propane, 1,4-diiodoperfluoro-n-butane, 1,3-diiodo-2-chloroperfluoro-n-propane, 1,5-diiodo-2,4-dichloroperfluoro-n-pentane, 1,7-diiodoperfluoro-n-octane, 1,12-diiodoperfluorodécane, 1,16-diiodoperfluorohexadécane, 1,2-di(iododifluorométhyl)perfluorocyclobutane, 1,4-di(iododifluorométhyl)tétrafluorocyclohexàne, 1,4-di(iodométhyl)benzène , (IVa), l'éthylèneglycol di(iodomethyl)ester (IVb), et le dimethyl-2,5-diiodoadipate (IVc).

Les réactifs I-R'-I préférés sont le 1,4-di(iodométhyl)benzène (Iva) l'éthylëneglycol di(iodomethyl)ester (IVb), et le dimethyl-2,5-düodoadipate (IVc).

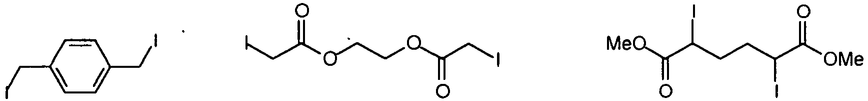

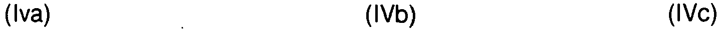

Le réactif iodé sélectionné pour la polymérisation dépend du type de monomère polymérisé et de l'architecture contrôlée désirée. Un bon équilibre entre la vitesse de transfert et la vitesse de réamorçage doit être trouvé.

Pour la synthèse de copolymères à architectures contrôlées en plusieurs étapes et pour la synthèse de télomères en une étape les trois types d'agents de transfert iodés de formules (II); (III) et (IV) sont utilisables.

Pour la synthèse de copolymères à architectures contrôlées en plusieurs étapes on préfère utiliser les agents de transfert iodés de formule R-1 (II) ou de formule I-R'-I (IV). Pour la synthèse de télomères on préfère utiliser les agents de transfert iodés de formule R-1 (II) ou Z₂-R'-I (III).

La polymérisation peut être mise en oeuvre notamment en masse, en solvant ou bien en milieu dispersé.

Lorsque la polymérisation est mise en oeuvre en solvant, ledit solvant est l'acétonitrile, l'acétate d'éthyle ou un alcool choisi parmi l'éthanol, l'isopropanol, ou leurs mélanges avec l'eau éventuellement.

La polymérisation mise en oeuvre en solvant dans l'acétonitrile ou un alcool comme l'éthanol constitue un mode de réalisation préféré de l'invention.

L'eau, un alcool ou un milieu hydro-alcoolique sont plus particulièrement recommandés dans le cadre de la mise en oeuvre de monomères hydrophiles du type de l'acide acrylique (AA), de l'acrylamide (AM), de l'acide 2-acrylamido-2-méthylpropanesulfonique (AMPS), et du sulfonate de styrène (SS) et/ou dans le cadre de la mise en oeuvre de monomères hydrophobes tels que l'acrylate de n-butyle ou de l'acrylate de 2-éthylhexyle.

Les exemples suivants illustrent l'invention sans en limiter la portée.

### Exemples :

### Exemple 1: Polymérisation radicalaire de l'acide vinyl phosphonique (AVP) en présence d'iode moléculaire I₂.

5,0 g (4,67 × 10⁻² mol) d'AVP, 0,29 g (1,77 × 10⁻³ mol) d'azobüsobutyronitrile (AIBN), 0,18 g (7,08 × 10⁻⁴ mol) d'lode I₂ et 10 g d'acétonitrile sont introduits dans un ballon bicol de 100 ml couvert d'un film d'aluminium et équipé d'un réfrigérant. Le mélange est dégazé à l'aide d'argon pendant 10 min à 0°C puis placé à 80°C sous agitation magnétique. La réaction est arrêtée lorsque le monomère n'est plus consommé. La conversion maximum atteinte est de 50% (mesurée par RMN ³¹P). Le polymère est obtenu par précipitation dans l'acétate d'éthyle, puis filtré et conservé dans le noir à 0°C. Une poudre blanche est obtenue.

Des analyses GPC dans l'eau ont été réalisées sur le produit obtenu ainsi que sur deux autres polymères synthétisés en présence de concentrations variables en iode I₂. Les analyses GPC montrent bien que les masses molaires sont contrôlées par le taux d'iode. Celles-ci sont d'autant plus élevées que la concentration initiale en I₂ est faible. De plus, une analyse élémentaire a été réalisée sur un échantillon pour lequel la concentration initiale en I₂ correspondait à un polymère contenant 30 unités AVP. L'analyse élémentaire confirme bien la valeur du degré de polymérisation moyen en nombre visée. En outre, l'analyse élémentaire confirme la présence d'iode.

### Exemple 2: Polymérisation radicalaire de l'acide vinyl phosphonique (AVP) en présence de C₆F₁₃-I:

5,0 g (4,67 × 10⁻² mol) d'AVP, 0,08 g (5,09 × 10⁻⁴ mol) d'AIBN, 0,69 g (1,54 × 10⁻³ mol) de C₆F₁₃I et 10 g d'acétonitrile sont introduits dans un ballon bicol de 100 ml couvert d'un film d'aluminium et équipé d'un réfrigérant. Le mélange est dégazé à l'aide d'argon pendant 10 min à 0°C, suivi par trois cycles vide/argon puis placé à 70°C sous agitation magnétique. La réaction est arrêtée lorsque le monomère n'est plus consommé. La conversion maximum atteinte est de 70% (mesurée par RMN ³¹P). Le polymère est obtenu par précipitation dans l'acétone, puis filtré et conservé dans le noir à 0°C. Une poudre blanche est obtenue.

La RMN ¹⁹F effectuée dans l'eau deutérée montre bien la présence des signaux du groupement C₆F₁₃-. Seul le signal du CF₂ en α de l'atome d'iode a disparu à -60 ppm et un nouveau signal caractérisant le CF₂ en α du CH₂ du VPA apparaît à -112ppm. En outre, une analyse Maldi-Tof corrobore ces résultats puisque la structure attendue C₆F₁₃(VPA)ₙ₋₁-CH=CHPO₃H₂ est observée (HI est éliminé en bout de chaîne lors de l'analyse). La très bonne hydrodispersabilité du polymère formé est également caractéristique de la formation d'un polymère amphiphile.

### Exemple 3: Polymérisation radicalaire de l'acide vinyl phosphonique (AVP) en présence de CH₃CH(CO₂CH₃)I :

5,0 g (4,67 × 10⁻² mol) d'AVP, 0,08 g (5,09 × 10⁻⁴ mol) d'AIBN, 0,33 g (1,54 × 10⁻³ mol) de CH₃CH(CO₂CH₃)I et 10 g d'acétonitrile sont introduits dans un ballon bicol de 100 ml couvert d'un film d'aluminium et équipé d'un réfrigérant. Le mélange est dégazé à l'aide d'Argon pendant 10 min à 0°C, suivi par trois cycles vide/Argon puis placé à 70°C sous agitation magnétique. La réaction est arrêtée lorsque le monomère n'est plus consommé. La conversion maximum atteinte est de 70% (mesurée par RMN ³¹P). Le polymère est obtenu par précipitation dans l'acétone, puis filtré et conservé dans le noir à 0°C. Une poudre blanche est obtenue.

Les analyses IR-TF et RMN¹H caractérisent la présence de la fonction ester de l'agent de transfert en bout de chaîne des oligomères d'AVP. En effet, l'analyse IR-TF montre la présence de la vibration du carbonyle à 1710 cm⁻¹. La RMN ¹H caractérise le pic du méthyle en α du groupement carbonyle. Enfin, une étude cinétique par chromatographie en phase gazeuse montre une consommation de l'agent iodé au cours de la réaction.

### Exemple 4: Synthèse de copolymère dibloc poly(acrylate de méthyle)-poly(acide vinyl phosphonique) :

2,0 g (2,22 × 10⁻² mol) d'acrylate de méthyle (AM), 0,379 g (2,31 × 10⁻³ mol) d'azobisisobutyronitrife (AIBN), 0,294 g (1,16 × 10⁻³ mol) d'lode I₂ et 10 g de toluène sont introduits dans un ballon bicol de 100 ml couvert d'un film d'aluminium et équipé d'un réfrigérant. Le mélange est dégazé à l'aide d'Argon pendant 10 min à 0°C puis placé à 80°C sous agitation magnétique. La réaction est stoppée avant conversion totale du monomère AM. Le brut réactionnel est analysé par GPC (éluent THF) et une masse molaire Mn de 1100 g/mol (étalons PMMA) est obtenue avec un indice de polymolécularité M_{w}/Mₙ de 1,6. L'analyse RMN¹H montre la présence de l'atome d'iode en bout de chaîne du polyacrylate de méthyle par le pic du proton -CH- à 4,5 ppm en position α de l'atome d'iode. L'acrylate de méthyle résiduel est totalement évaporé sous vide avant l'étape suivante de polymérisation.

1,54 g (1,54 × 10⁻³ mol) du polyacrylate de méthyle fonctionnalisé par un atome d'iode terminal, 5,0 g (4,67 × 10⁻² mol) d'AVP, 0,08 g (5,09 × 10⁻⁴ mol) d'AIBN, et 10 g de toluène sont introduits dans un ballon bicol de 100 ml couvert d'un film d'aluminium et équipé d'un réfrigérant. Le mélange est dégazé à l'aide d'Argon pendant 10 min à 0°C, suivi par trois cycles vide/argon puis placé à 70°C sous agitation magnétique. La réaction est arrêtée lorsque le monomère n'est plus consommé. La conversion maximum atteinte est de 50% (mesurée par RMN ³¹P). Après évaporation totale du toluène sous vide et ajout d'eau, le polymère obtenu forme une dispersion aqueuse stable.

## Revendications

1. Procédé de synthèse d'un copolymère à architecture contrôlée comprenant au moins un bloc A obtenu par la polymérisation d'un mélange de monomères à insaturatbn éthylénique (A₉) ne comprenant pas de monomères à fonctions vinyl phosphonate et au moins un bloc B obtenu par la polymérisation d'un mélange de monomères à insaturation èthylènique (Bₙ), comprenant au moins un monomère B₁ portant au moins une fonction vinyl phosphonate comprenant les étapes suivantes :
(a) on réalise une polymérisation radicalaire menant à l'obtention d'un polymère fonctionnalisé en son extrémité par une atome d'iode utile à titre d'agent de transfert dans une réaction de polymérisation radicalaire contrôlée, ladite étape étant conduite en mettant en contact.
- des molécules monomères éthyléniquement insaturées.
- une source de radicaux libres, et
au moins un agent de transfert iodé
(b)on réalise, suite à l'étape (a), une étape de polymérisation radicalaire ou plusieurs étapes successives de polymérisations radicalaires, ladite ou lesdites étape(s) consistant chacune a effectuer une polymérisation redicalaire menant à l'obtention d'un copolymère à blocs fonctionnalisé en son extrémité par un atome d'iode utile à titre d'agent de transfert dans une réaction de polymérisation radicalaire, ladite ou lesdites étapes étant conduite(s) en mettant en contact ;
- des molécules monomères éthyléniquement insaturées dont au moins une est différente de celles mis en oeuvre dans l'étape prècèdente,
- une source de radicaux libres, et
le polymère fonctionnalisé issu de l'étape précédente ;
étant entendu que l'une des étapes de polymérisation (a) et (b) définies ci-dessus conduit a la formation du bloc B, c'est a dire du bloc comprenant les fonctions vinyl phosphonate et qu'une autre des étapes de polymérisation des étapes (a) et (b) conduit à la formation d'un autre bloc, en l'occurrence le bloc A,
les monomères éthyléniquement insaturés mis en oeuvre dans les étapes (a) et (b) étant choisis parmi les monomères adaptés pour obtenir une copolymère à architecture contrôlée tel que défini précédemment.

2. Procédé de synthèse d'un copolymère à architecture contrôlée de type télomère comprenant au moins une chaîne B obtenu par la polymérisation d'un mélange de monomères à insaturation éthylénique (B₀) comprenant au moins un monomère B₁ portant au moins une fonction vinyl phosphonate comprenant l'étape suivante:
on met en contact :
- des molécules monomères éthyléniquement insaturées,
- une source de radeaux libres, et
au moins un agent de transfert iodé.

3. Procédé selon la revendication 1 ou 2, **caractérisé en ce que** sa quantité de monomère B1 est supérieure à 10% en mole par rapport au bloc B ou à la chaîne B.

4. Procédé selon l'une quelconque des revendications 1 à 3, **caractérisé en ce que** la quantité de monomère B1 est supérieure à 50% en mole par rapport au bloc B ou à la chaîne B.

5. Procédé selon l'une quelconque des revendications 1 a 4, **caractérisé en ce que** l'agent de transfert iodé est choisi parmi les composés de formule (II) suivante :
R-I (II)
dans laquelle,
R représente :
- un groupe alkyle, acyle, aryle, alcényle ou alcynyle,
- un cycle carboné, saturé ou non, éventuellement aromatiquement;
- un hétérocycle, saturé ou non, éventuellement aromatique,
- une chaîne polymère:
- un atome diode ; ou
- Hl₂C-,
lorsque R est différent d'un atome d'iode ou du radical Hl₂C, R comprend en outre au moins un groupement stabilisant du radical R et possède de 1 à 50 atomes de carbone, le polymère et le groupe stabilisant du radical étant liés au même atome de carbone dans R.
Le groupe stabilisant du radical R peut être aryle, alcène, ester, acide, amide, cétone, nitrile, halogéne, isocyanate, nitro et amine.

6. Procédé selon la revendication 5. **caractérisé en ce que** le groupe stabilisant du radical R est choisi parmi C₈H₄CH₃, C₆H₅, (C=O)OCH₃, F, Cl ou CN,

7. Procédé selon l'une quelconque des revendications 5 ou 6, **caractérisé en ce que** l'agent de transfert iodé est choisi parmi le 1-iodoperfluorohexane (C₆F₁₃l), l'iodacétonitrile (CNCH₂I), le methyl-2-iodopropionate (CH₃CH(CO₂CH₃)-I), le 1-phényl-1-lodoéthane (CH₃CH(₆H₅)-I) et l'iodure de benzyle (C₆H₆CH₂-I).

8. Procédé selon l'une quelconque des revendications 1 à 4, **caractérisé en ce que** l'agent de transfert iodé est choisi parmi les composés de formule (III) suivante:
Z₂-R'-I (III)
dans laquelle,
R' représente :
- un groupe alkylène, arylène,
- un cycle carboné, saturé, ou non, éventuellement aromatique ;
- un hétérocycle, saturé ou non, éventuellement aromatique; ou
- une chaîne polymère ;
avec R', comme noté ci-dessus, comprenant au moins un groupement stabilisant du radical Z₂-R' et possède de 1 à 50 atomes de carbone, le polymère et le groupe stabilisant du radical étant liés au même atome de carbone dans Z₂-R';
le groupe stabilisant du radical R' peut être aryle, alcène, ester, acide, amide, cétone, nitrile, halogène, isocyanate, nitro et amine;
Z₂ est sélectionné parmi les groupes OR₁, N(R₁)₂, SR₁; COOR₁, COOM, oléfine du type -CR₁=C(R₁)₂, époxy, SO₃M, P(O)(OR₁)₂, P(R₁)₃, isocyanate et CR₁=O, où R₁ est un atome d'hydrogène ou un groupe ayant de 1 à 20 atomes de carbone, R₁ étant identique ou différent pour tout Z₂ possédant plus de un R₁, et où M est un sel de métal alcalin tel qu'un sel de sodium ou de potassium.

9. Procédé selon la revendication 8, **caractérisé en ce que** l'agent de transfert Z₂-R'-I préférés iodé est choisi parmi l'acide 3-iodo-4-chloroperfluorobutyrique, l'iodure d'allyle ou encore le 1-iodo-1phényléthanol (IIIa) ou l'acide iodoacétique (IIIb) décrits ci-dessous:

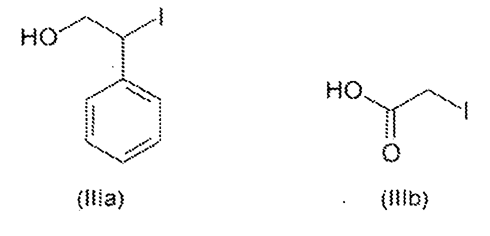

10. Procédé selon l'une quelconque des revendications 1 à 4, **caractérisé en ce que** l'agent de transfert iodé est choisi parmi les composés de formule (IV) suivante:
I-R'-I (IV)
dans laquelle
R' représente :
- un groupe alkylène, aryléne,
- un cycle carboné, saturé ou non, éventuellement aromatique;
- un hétérocycle, saturé ou non, éventuellement aromatique; ou
- une chaîne polymère ;
R', comme noté précédemment, comprend au moins un groupement stabilisant du radical R' et possède de 1 à 50 atomes de carbone, le polymère et le groupe stabilisant du radical étant liés au même atome de carbone dans R';
le groupe stabilisant du radical peut être aryle, alcène, ester, acide, amide, cétone, nitrile, halogène, isocyanate, nitro et amine.

11. Procédé selon la revendication 10, **caractérisé en ce que** le groupe stabilisant du radical R' est choisi parmi C₆H₄CH₃, C₈H₆, (C=O)OCH₃, F, Cl ou CN.

12. Procédé selon la revendication 10 ou 11, **caractérisé en ce que** l'agent de transfert iodé est choisi parmi les composés suivants: le 1,4-di(iodométhyl)benzène (IVa), l'éthyléneglycol di(iodomethyl)ester (IVb), ou le dimethyl-2,5-diiodoadipate (IVc):

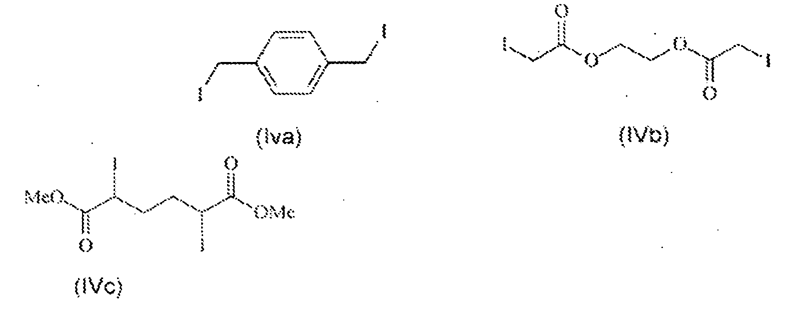

13. Procédé selon l'une quelconque des revendications 1 ou 3 à 12, **caractérisé en ce que** le mélange de monomères A₀ comprend au moins un monomère choisi parmi les monomères hydrophiles (h) ou hydrophobes (H) suivants:
Parmi les monomères hydrophiles (h):
- les acides mono- et di-carboxyliques insaturés éthyléniques tels que l'acide acrylique, l'acide méthacrylique, l'acide itaconique, l'acide maléique, ou l'acide fumarique et leurs dérivés tels que les mono-alkylesters de préférence avec des alcools en C₁-C₄, et les amides comme l'acrylamide, le méthacrylamide, ou
- les monomères éthyléniques comprenant un groupe uréido tels que l'éthylène urée éthyl méthacrylamique, ou l'éthylène urée éthyl méthacrylate, ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthyléne-méthacrylate ou
- les monomères porteurs d'une fonction acide boronique tel que le p-vinylphényl acide boronique, ou
- les monomères cationiques choisis parmi les (méth)acrylates d'aminoalkyle, les (méth)acrylamides d'aminoalkyle ; les monomères comprenant au moins une fonction amine secondaire, tertiaire ou quaternaire, ou un groupe hétérocyclique contenant un atome d'azote; les sels d'ammonium de diallyldialkyl; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 a 6 atomes de carbone), un phosphate, un citrate, un formate, un acétate, tels que le diméthyl amino éthyl (méth)acrylate, dimèthyl amino propyl (méth)acrylate le ditertiobutyl aminoéthyl (méth)acrylate, le diméthyl amino méthyl (méth)acrylamide, le diméthyl amine propyl (méth)acrylamide ; l'éthylène imine, la vinylamine, la 2-vinylpyridine, la 4-vinylpyridine ; le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de trimethyl ammonium éthyl (méth)acrylamido, le chlorure de triméthyl ammonium de vinylbenzyle; le chlorure d'ammonium de diallyldiméthyl seuls ou en mélanges ou leurs sels correspondants, ou
- l'alcoolpolyvinylique résultant de l'hydrolyse d'un polyacétate de vinyle par exemple, ou
- plus généralement, les polymères hydrophiles provenant d'une modification chimique d'un bloc hydrophobe, par exemple par hydrolyse d'un polyacrylate d'alkyle en polyacide acrylique ;
- les amides cycliques de la vinylamine, tel que le N-vinylpyrrolidone et le vinylcaprolactame ;
ou parmi les monomères ayant un caractère hydrophobe (H);
- les monomères dérivés styréniques tels que le styrène, l'alphaméthylstyrène. le paraméthylstyréne ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'actrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle, le versatate de vinyle, ou le propionatede vinyle,
- les halogénures de vinyle ou de vinylidène, par exemple le chlorure de vinyle, le fluorure de vinyle, le chlorure de vinylidène et le fluorure de vinylidène et
- les monomères diéniques, par exemple le butadiène ou l'isoprène.

14. Procédé selon l'une quelconque des revendications ou 3 à 13, **caractérisé en ce que** le mélange de monomères A₀ comprend au moins un monomère choisi parmi les monomères suivants :
acide acrylique (AA) ou l'alcool polyvinylique.

15. Procédé seion l'une quelconque des revendications 1 à 14, **caractérisé en ce que** le monomère B, est choisi parmi l'acide vinyl phosphonique le diméthyl ester de l'acide vinyl phosphonique, le bis(2-chloroethyl) ester de l'acide vinyl phosphonique, l'acide vinylidène diphosphonique, le tetraisopropylester de l'acide vinylidène diphosphonique, l'acide alpha-styrène phosphonique ou leurs mélanges.

16. Procédé selon l'une des revendications 1 à 15, **caractérisé en ce que** le monomère B₂ est choisi parmi l'acide acrylique, l'acrylamide, l'acide vinyl sulfonique, l'acétate de vinyle, l'acrylate de butyle ou leurs mélanges.

## Claims

1. A method for synthesizing a copolymer with controlled architecture comprising at least one block A obtained by polymerizing a mixture of monomers with ethylene unsaturation (A₀) not comprising any monomers with vinyl phosphonate functions, and at least one block B obtained by polymerizing a mixture of monomers with ethylene unsaturation (B₀) comprising at least one monomer B₁ carrying at least one vinyl phosphonate function comprising the following steps:
(a) radical polymerization is performed leading to the obtaining of a polymer whose end is functionalized by an iodine atom useful as transfer agent in a controlled radical polymerization reaction, the said step being conducted by placing in contact:
- ethylenically unsaturated monomer molecules,
- a source of free radicals, and
at least one iodine transfer agent
(b) after step (a) a radical polymerization step is performed or several successive radical polymerization steps, the said step(s) each consisting of performing radical polymerization leading to the obtaining of a block copolymer whose end is functionalized by an iodine atom useful as transfer agent in a radical polymerization reaction, the said step(s) being conducted by placing in contact:
- ethylenically unsaturated monomer molecules of which at least one is different from those used in the preceding step,
- a source of free radicals, and
the functionalized polymer derived from the preceding step;
on the understanding that one of the polymerization steps (a) and (b) defined above leads to the formation of the B block i.e. the block comprising the vinyl phosphonate functions, and that another of the polymerization steps at steps (a) and (b) leads to the formation of another block, in this case block A,
the ethylenically unsaturated monomers used at steps (a) and (b) being chosen from among the monomers suitable for obtaining a copolymer with controlled architecture such as defined previously.

2. A method for synthesizing a copolymer with controlled architecture of telomer type comprising at least one chain B obtained by polymerizing a mixture of monomers with ethylene unsaturation (B₀) comprising at least one monomer B₁ carrying at least one vinyl phosphonate function comprising the following step:
the following are placed in contact:
- ethylenically unsaturated monomer molecules,
- a source of free radicals, and
at least one iodine transfer agent.

3. The method according to claim 1 or 2, **characterized in that** the quantity of monomer B 1 is 10 mole % greater relative to block B or chain B.

4. The method according to any of claims 1 to 3, **characterized in that** the quantity of monomer B1 is 50 mole % greater relative to block B or chain B.

5. The method according to any of claims 1 to 4 **characterized in that** the iodine transfer agent is chosen from among the compounds of the following formula (II):
R-I (II)
wherein:
R is:
- an alkyl, acyl, aryl, alkenyl or alkynyl group,
- a carbon ring, saturated or unsaturated, optionally aromatic,
- a heterocycle, saturated or unsaturated, optionally aromatic,
- a polymer chain,
- an iodine atom; or
- Hl₂C-,
if R is different from an iodine atom or the Hl₂C- radical, R further comprises at least one stabilizing group of the radical R and has 1 to 50 carbon atoms, the polymer and the radical stabilizing group being bonded to the same carbon atom in R,
The stabilizing group of the radical R may be aryl, alkene, ester, acid, amide, ketone, nitrile, halogen, isocyanate, nitro and amine.

6. The method according to claim 5, **characterized in that** the stabilizing group of the radical R is chosen from among C₆H₄CH₃, C₆H₅ (C=O)OCH₃, F, CI or CN.

7. The method according to any of claims 5 or 6, **characterized in that** the iodine transfer agent is chosen from among 1-iodoperfluorohexane (C₆F₁₃I), iodoacetonitrile (CNCH₂I), methyl-2-iodopropionate (CH₃CH(CO₂CH₃)-I), 1-phenyl-1-iodoethane (CH₃CH(C₆H₅)-i) and benzyl iodide (C₆H₅CH₂-I).

8. The method according to any of claims 1 to 4, **characterized in that** the iodine transfer agent is chosen from among the compounds of the following formula (III)
Z₂-R'-I (III)
wherein:
R' is:
- an alkylene, arylene group,
- a carbon ring, saturated or unsaturated, optionally aromatic,
- a heterocycle, saturated or unsaturated, optionally aromatic, or
- a polymer chain;
with R', as noted above, comprising at least one stabilizing group of the radical Z₂-R' has 1 to 50 carbon atoms, the polymer and the radical stabilizing group being bonded to the same carbon atom in Z₂-R';
the stabilizing group of the radical R' may be aryl, alkene, ester, acid, amide, ketone, nitrile, halogen, isocyanate, nitro and amine;
Z₂ is chosen from among the groups OR₁, N(R₁)₂, SR₁, COOR₅, COOM, olefin of type - CR₁=C(R₁)₂, epoxy, SO₃M, P(O)(OR₁)₂, P(R₁)₃, isocyanate and CR₁=O where R₁ is a hydrogen atom or a group having 1 to 20 carbon atoms, R₁ being the same or different for every Z₂ having more than one R₁, and where M is an alkaline metal salt such as sodium or potassium salt.

9. The method according to claim 8 **characterized in that** the preferred iodine transfer agent Z₂-R'-I is chosen from among 3-iodo-4-chloroperfluorobutyric acid, allyl iodide or 1-iodo-1phenylethanol (IIIa) or iodoacetic acid (IIIb) described below:

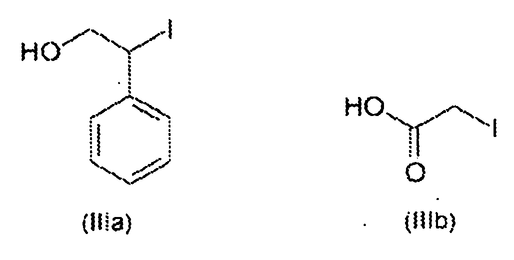

10. The method according to any of claims 1 to 4, **characterized in that** the iodine transfer agent is chosen from among the compounds of the following formula (IV):
I-R'-I (IV)
wherein:
R' is:
- an alkylene, arylene group,
- a carbon ring, saturated or unsaturated, optionally aromatic,
- a heterocycle, saturated or unsaturated, optionally aromatic; or
- a polymer chain;
R', as noted previously, comprises at least one group stabilizing the radical R' and has 1 to 50 carbon atoms, the polymer and the radical stabilizing group being bonded to the same carbon atom in R';
the radical stabilizing group can be aryl, alkene, ester, acid, amide, ketone, nitrile, halogen, isocyanate, nitro and amine.

11. The method according to claim 10 **characterized in that** the group stabilizing the radical R' is chosen from among C₆H₄CH₃, C₅H₆, (C=O)OCH₃, F, CI or CN.

12. The method according to claim 10 or 11 **characterized in that** the iodine transfer agent is chosen from among the following compounds: 1,4-di(iodomethyl)benzene (IVa), ethylene glycol di(iodomethyl)ester (IVb) or dimethyl-2,5-diiodoadipate (IVc):

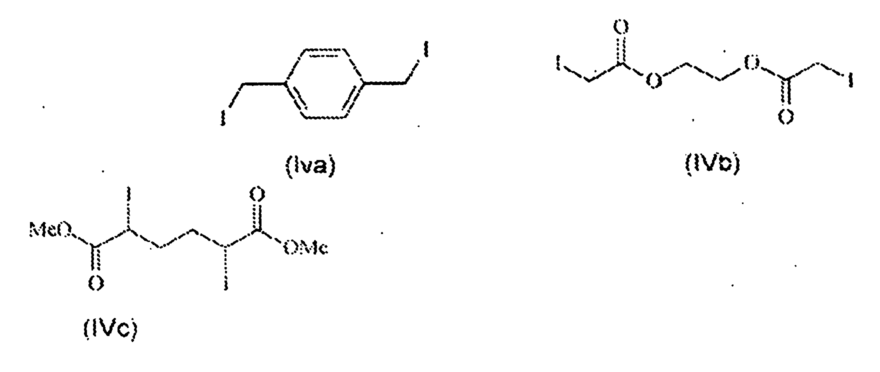

13. The method according to any of claims 1 or 3 to 12, **characterized in that** the mixture of monomers A₀ comprises at least one monomer chosen from among the following hydrophilic (h) monomers or hydrophobic (H) monomers:
Among the hydrophilic (h) monomers:
- the ethylenically unsaturated mono- and di-carboxylic acids such as acrylic acid, methacrylic acid, itaconic acid, maleic acid or fumaric acid and the derivatives thereof such as the mono-alkylesters preferably with C₁-C₄ alcohols, and the amides such as acrylamide, methacrylamide; or
- the ethylene monomers comprising a ureido group such as ethylene urea ethyl methacrylamide, or ethylene urea ethyl methacrylate; or
- the ethylene monomers comprising a sulfonic acid group or one of its alkaline or ammonium salts, such as for example vinylsulfonic acid, vinylbenzenesulfonic acid, alpha-acrylamido-methyl propanesulfonic acid or 2-sulfoethylene methacrylate; or
- the monomers carrying a boronic acid function such as p-vinyl-phenyl boronic acid; or
- the cationic monomers chosen from among the aminoalkyl (meth)acrylates, aminoalkyl (meth)acrylamides; the monomers comprising at least one secondary, ternary or quaternary amine function, or a heterocyclic group containing a nitrogen atom; the ammonium salts of diallyldialkyl; these monomers being taken alone or in mixtures, and in salt form, the salts preferably being chosen so that the counter-ion is a halide such as a chloride or a sulfate, a hydrosulfate, an alkylsulfate (e.g. comprising 1 to 6 carbon atoms), a phosphate, a citrate, a formate, an acetate, such as dimethylaminoethyl (meth)acrylate, dimethylaminopropyl (meth)acrylate, di(tertbutyl)aminoethyl(meth)acrylate, dimethylamino-methyl (meth)acrylamide, dimethylamino-propyl(meth)acrylamide; ethylene imine, vinylamine, 2-vinylpyridine, 4-vinylpyridine; the chloride of trimethylammonioethyl(meth)acrylate, the methyl sulphate of trimethylammonioethyl acrylate, the chloride of benzyldimethylammonio ethyl (meth)acrylate, the chloride of (4-benzoylbenzyl)dimethyl ammonio ethyl acrylate, the chloride of trimethylammonioethyl(meth)acrylamide, trimethyl(vinylbenzyl) ammonium chloride, diallyldimethyl ammonium chloride, alone or in mixtures or the corresponding salts thereof, or
- the polyvinyl alcohol resulting from the hydrolysis of a polyvinyl acetate for example,
or
- more generally the hydrophilic polymers derived from chemical modification of a hydrophobic block, for example by hydrolysis of an alkyl polyacrylate to an acrylic polyacid;
- the cyclic amides of vinylamine such as N-vinylpyrrolidone and vinylcaprolactame; or from among the monomers having a hydrophobic (H) nature:
- the monomers derived from styrene such as styrene, alphamethylstyrene, paramethylstyrene or para(tertiobutyl)styrene, or
- the esters of acrylic acid or methacrylic acid with C₁-C₁₂ alcohols, preferably C₁-C₈, optionally fluorinated, such as for example methyl acrylate, ethyl acrylate, propyl acrylate, n-butyl acrylate, isobutyl acrylate, 2-ethylhexyl acrylate, t-butyl acrylate, methyl methacrylate, ethyl methacrylate, n-butyl methacrylate, isobutyl methacrylate,
- the vinyl nitriles containing 3 to 12 carbon atoms and in particular acrylonitrile or methacrylonitrile,
- the vinyl esters of carboxylic acids such as vinyl acetate, vinyl versatate or vinyl propionate,
- the vinyl or vinylidene halides, for example vinyl chloride, vinyl fluoride, vinylidene chloride and vinylidene fluoride, and
- the diene monomers for example butadiene or isoprene.

14. The method according to any of claims 1 or 3 to 13 **characterized in that** the mixture of monomers A₀ comprises at least one monomer chosen from among the following monomers:
acrylic acid (AA) or polyvinyl alcohol.

15. The method according to any of claims 1 to 14, **characterized in that** the monomer B₁ is chosen from among vinyl phosphonic acid, the dimethyl ester of vinyl phosphonic acid, the bis(2-chloroethyl) ester of vinyl phosphonic acid, vinylidene diphosphonic acid, the tetraisopropyl ester of vinylidene diphosphonic acid, alpha-styrene phosphonic acid or the mixtures thereof.

16. The method according to one of claims 1 to 15 **characterized in that** the monomer B₂ is chosen from among acrylic acid, acrylamide, vinyl sulfonic acid, vinyl acetate, butyl acrylate or the mixtures thereof.

## Patentansprüche

1. Verfahren für die Synthese eines Copolymers mit kontrollierter Architektur, das mindestens einen Block A umfasst, gewonnen durch die Polymerisation eines ethylenisch ungesättigten Monomergemischs (A₀), das keine Monomere mit Vinylphosphonatfunktionen umfasst, und mindestens einen Block B, gewonnen durch die Polymerisation eines ethylenisch ungesättigten Monomergemischs (B₀), das mindestens ein Monomer B₁ umfasst, das mindestens eine Vinylphosphonatfunktion trägt, das die folgenden Schritte umfasst:
(a) Durchführen einer radikalische Polymerisation, die zur Gewinnung eines an seinem Ende durch ein Jodatom funktionalisierten Polymers führt, das als Transfermittel in einer kontrollierten radikalischen Polymerisationsreaktion nützlich ist, wobei der Schritt durchgeführt wird, indem er in Kontakt bringt:
- ethylenisch ungesättigte Monomermoleküle,
- eine Quelle freier Radikale und
mindestens ein jodhaltiges Transfermittel,
(b) Durchführen eines radikalischen Polymerisationsschritts oder mehrerer aufeinanderfolgender radikalischer Polymerisationsschritte nach Schritt (a), wobei der Schritt oder die Schritte jeweils darin bestehen, eine radikalische Polymerisation durchzuführen, die zur Gewinnung eines Copolymers mit an seinem Ende durch ein Jodatom funktionalisierten Blöcken führt, das als Transfermittel in einer radikalischen Polymerisationsreaktion nützlich ist, wobei der oder die Schritte durchgeführt werden, indem er/sie in Kontakt bringen:
- ethylenisch ungesättigte Monomermoleküle, von denen sich mindestens eins von denen, die im vorangegangenen Schritt umgesetzt wurden, unterscheidet,
- eine Quelle freier Radikale und
das funktionalisierte Polymer aus vorangegangenem Schritt,
wobei es sich dabei versteht, dass einer der oben definierten Polymerisationsschritte (a) und (b) zur Bildung des Blocks B führt, das heißt des Blocks, der die Vinylphosphonatfunktionen umfasst, und dass ein anderer der Polymerisationsschritte der Schritte (a) und (b) zur Bildung eines anderen Blocks führt, im vorliegenden Fall von Block A,
wobei die in den Schritten (a) und (b) umgesetzten ethylenisch ungesättigten Monomere aus den Monomeren ausgewählt sind, die zur Gewinnung eines Copolymers mit kontrollierter Architektur, so wie oben definiert, geeignet sind.

2. Verfahren für die Synthese eines Copolymers mit kontrollierter Architektur vom Typ Telomer, das mindestens eine Kette B umfasst, die durch die Polymerisation eines ethylenisch ungesättigten Monomergemischs (B₀) gewonnen wird, das mindestens ein Monomer B₁ umfasst, das mindestens eine Vinylphosphonatfunktion trägt, das den folgenden Schritt umfasst:
man bringt in Kontakt:
- ethylenisch ungesättigte Monomermoleküle,
- eine Quelle freier Radikale und
mindestens ein jodhaltiges Transfermittel.

3. Verfahren nach Anspruch 1 oder 2, **dadurch gekennzeichnet, dass** die Menge von Monomer B1 in Mol im Verhältnis zum Block B oder zur Kette B 10% höher ist.

4. Verfahren nach einem der Ansprüche 1 bis 3, **dadurch gekennzeichnet, dass** die Menge von Monomer B1 in Mol im Verhältnis zum Block B oder zur Kette B 50 % höher ist.

5. Verfahren nach einem der Ansprüche 1 bis 4, **dadurch gekennzeichnet, dass** das jodhaltige Transfermittel aus den Verbindungen der folgenden Formel (II) ausgewählt ist:
R-I (II)
wobei
R darstellt:
- eine Alkyl-, Acyl-, Aryl-, Alkenyl- oder Alcynylgruppe,
- eine kohlenstoffhaltige Verbindung, gesättigt oder nicht, eventuell aromatisch,
- ein heterocyclische Verbindung, gesättigt oder nicht, eventuell aromatisch,
- eine Polymerkette,
- ein Jodatom, oder
- HI₂C-,
wenn R von einem Jodatom oder dem Radikal HI₂C- unterschiedlich ist, R ferner mindestens eine stabilisierende Gruppe des Radikals R umfasst und 1 bis 50 Kohlenstoffatome besitzt, wobei das Polymer und die stabilisierende Gruppe des Radikals an dasselbe Kohlenstoffatom in R gebunden sind,
wobei die stabilisierende Gruppe des Radikals R Aryl, Alken, Ester, Säure, Amid, Keton, Nitril, Halogen, Isocyanat, Nitro und Amin sein kann.

6. Verfahren nach Anspruch 5, **dadurch gekennzeichnet, dass** die stabilisierende Gruppe des Radikals R aus C₆H₄CH₃, C₆H₅, (C=O)OCH₃, F, Cl oder CN ausgewählt ist.

7. Verfahren nach einem der Ansprüche 5 oder 6, **dadurch gekennzeichnet, dass** das jodhaltige Transfermittel aus dem 1-Iodperfluorhexan (C₆F₁₃I), dem Iodacetonitril (CNCH₂I), dem Methyl-2-iodpropionat (CH₃CH(CO₂CH₃)-I), dem 1-Phenyl-1-iodethan (CH₃CH(C₆H₅)-I) und dem Benzyliodid (C₆H₅CH₂-I) ausgewählt ist.

8. Verfahren nach einem der Ansprüche 1 bis 4, **dadurch gekennzeichnet, dass** das jodhaltige Transfermittel aus den Verbindungen der folgenden Formel (III) ausgewählt ist:
Z₂-R'-I (III)
wobei
R' darstellt:
- eine Alkylen-, Arylengruppe,
- eine kohlenstoffhaltige Verbindung, gesättigt oder nicht, eventuell aromatisch,
- ein heterocyclische Verbindung, gesättigt oder nicht, eventuell aromatisch, oder
- eine Polymerkette,
wobei R', wie oben vermerkt, mindestens eine stabilisierende Gruppe des Radikals Z₂-R' umfasst und 1 bis 50 Kohlenstoffatome besitzt, wobei das Polymer und die stabilisierende Gruppe des Radikals an dasselbe Kohlenstoffatom in Z₂-R' gebunden sind,
wobei die stabilisierende Gruppe des Radikals R' Aryl, Alken, Ester, Säure, Amid, Keton, Nitril, Halogen, Isocyanat, Nitro und Amin sein kann,
wobei Z₂ aus den Gruppen OR₁, N(R₁)₂, SR₁, COOR₁, COOM, Olefin vom Typ -CR₁=C(R₁)₂, Epoxy, SO₃M, P(O)(OR₁)₂, P(R₁)₃, Isocyanat und CR₁=O ausgewählt ist, wobei R₁ ein Wasserstoffatom oder eine Gruppe ist, die 1 bis 20 Kohlenstoffatome hat, wobei R₁ für jedes Z₂ identisch oder unterschiedlich ist, das mehr als ein R₁ besitzt, und wobei M ein alkalisches Metallsalz wie ein Natrium- oder ein Kaliumsalz ist.

9. Verfahren nach Anspruch 8, **dadurch gekennzeichnet, dass** das bevorzugte jodhaltige Transfermittel Z₂-R'-1 aus der 3-Iod-4-chlorperfluorbuttersäure, dem Allyljodid oder auch dem 1-Iod-1 phenylethanol (IIIa) oder der Jodessigsäure (IIIb) ausgewählt ist, die hier unten beschrieben sind:

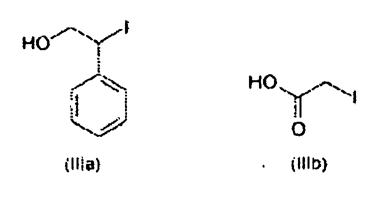

10. Verfahren nach einem der Ansprüche 1 bis 4, **dadurch gekennzeichnet, dass** das jodhaltige Transfermittel aus den Verbindungen der folgenden Formel (IV) ausgewählt ist:
I-R'-I (IV)
wobei
R' darstellt:
- eine Alkylen-, Arylengruppe,
- eine kohlenstoffhaltige Verbindung, gesättigt oder nicht, eventuell aromatisch,
- ein heterocyclische Verbindung, gesättigt oder nicht, eventuell aromatisch, oder
- eine Polymerkette,
wobei R', wie zuvor vermerkt, mindestens eine stabilisierende Gruppe des Radikals R' umfasst und 1 bis 50 Kohlenstoffatome besitzt, wobei das Polymer und die stabilisierende Gruppe des Radikals an dasselbe Kohlenstoffatom in R' gebunden sind,
wobei die stabilisierende Gruppe des Radikals Aryl, Alken, Ester, Säure, Amid, Keton, Nitril, Halogen, Isocyanat, Nitro und Amin sein kann.

11. Verfahren nach Anspruch 10, **dadurch gekennzeichnet, dass** die stabilisierende Gruppe des Radikals R' aus C₆H₄CH₃, C₆H₅, (C=O)OCH₃, F, CI oder CN ausgewählt ist.

12. Verfahren nach Anspruch 10 oder 11, **dadurch gekennzeichnet, dass** das jodhaltige Transfermittel aus den folgenden Verbindungen ausgewählt ist: dem 1,4-Di(iodmethyl)benzol (IVa), dem Ethylenglycoldi(iodmethyl)ester (IVb) oder dem Dimethyl-2,5-diiodadipat (IVc):

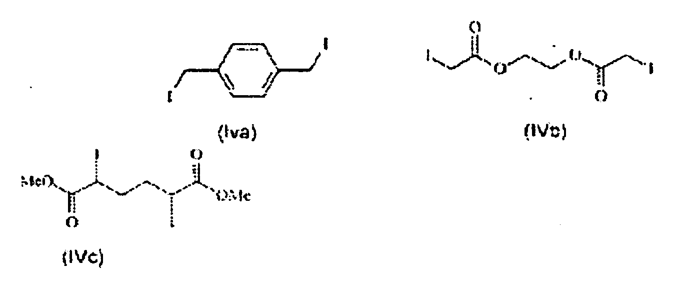

13. Verfahren nach einem der Ansprüche 1 oder 3 bis 12, **dadurch gekennzeichnet, dass** das Monomergemisch A₀ mindestens ein Monomer umfasst, das aus den folgenden hydrophilen (h) oder hydrophoben (H) Monomeren ausgewählt ist:
aus den hydrophilen Monomeren (h):
- den ethylenisch ungesättigten Mono- und Dicarbonsäuren wie der Akrylsäure, der Methacrylsäure, der Itaconsäure, der Maleinsäure, oder der Fumarsäure und ihren Derivaten wie den Mono-Alkylestern vorzugsweise mit C₁-C₄-Alkoholen, und den Amiden wie dem Acrylamid, dem Methacrylamid, oder
- den ethylenischen Monomeren, die eine Ureidgruppe umfassen, wie das Ethylen-ureaethyl-Methacrylamid, oder das Ethylen-ureaethyl-Methacrylat, oder
- den ethylenischen Monomeren, die eine Sulfonsäuregruppe oder eines ihrer alkalischen oder Ammoniumsalze aufweisen, wie zum Beispiel die Vinylsulfonsäure, die Vinylbenzolsulfonsäure, die alpha-Acrylamid-methyl-propansulfonsäure oder das 2-Sulfoethylen-methacrylat, oder
- den Monomeren, die Träger einer Boronsäurefunktion sind, wie der p-Vinylphenylboronsäure, oder
- den kationischen Monomeren, die aus den Aminoalkyl(meth)acrylaten, den Aminoalkyl(meth)acrylamiden ausgewählt sind; den Monomeren, die mindestens eine sekundäre, tertiäre oder quaternäre Aminfunktion umfassen, oder eine heterocyclische Gruppe, die ein Stickstoffatom enthält; den Diallyldialkyl-Ammoniumsalzen; wobei diese Monomere allein oder in Gemischen herangezogen werden, sowie in Form von Salzen, wobei die Salze vorzugsweise derart ausgewählt sind, dass das Gegenion ein Halogenid ist, wie zum Beispiel ein Chlorid, oder ein Sulfat, ein Hydrosulfat, ein Alkylsulfat (das beispielsweise 1 bis 6 Kohlenstoffatome umfasst), ein Phosphat, ein Citrat, ein Format, ein Acetat, wie das Dimethylaminoethylmethacrylat, Dimethylaminopropylmethacrylat, das Ditertiobutylaminoethylmethacrylat, das Dimthylaminomethylmethacrylamid, das Dimethylaminopropylmethacrylamid; das Ethylenimin, das Vinylamin, das 2-Vinylpyridin, das 4-Vinylpyridin; das Trimethylammoniumethylmethacrylatchlorid, das Trimethylammoniumethylacrylatmethylsulfat, das Benzyldimethylammoniumethylmethacrylatchlorid, das 4-Benzoylbenzyldimethylammoniumethylacrylatchlorid, das Trimethylammoniumethylmethacrylamidchlorid, das Vinylbenzyltrimethylammoniumchlorid; das Diallyldimethylammoniumchlorid allein oder in Gemischen, oder ihren entsprechenden Salzen, oder
- dem Alkoholpolyvinyl im Ergebnis der Hydrolyse eines Polyvinylacetats zum Beispiel, oder
- allgemeiner den hydrophilen Polymeren, die aus einer chemischen Modifizierung eines hydrophoben Blocks resultieren, beispielsweise durch Hydrolyse eines Alkylpolyacrylats in Polyakrylsäure,
- den cyclischen Amiden des Vinylamins, wie dem N-Vinylpyrrolidon und dem Vinylcaprolactam,
oder aus den Monomeren mit einem hydrophoben Charakter (H):
- den Styrenderivat-Monomeren, wie dem Styren, dem Alphamethylstyren, dem Paramethylstyren oder dem Paratertiobutylstyren, oder
- den Estern der Akrylsäure oder der Methacrylsäure mit C₁-C₁₂-Alkoholen, vorzugsweise C_{I}-C₈, eventuell fluoriert, wie zum Beispiel dem Methylacrylat, dem Ethylacrylat, dem Propylacrylat, dem n-Butylacrylat, dem Isobutylacrylat, dem 2-Ethylhexylacrylat, dem t-Butylacrylat, dem Methylmethacrylat, dem Ethylmethacrylat, dem n-Butylmethacrylat, dem Isobutylmethacrylat,
- den Vinylnitrilen, die 3 bis 12 Kohlenstoffatome enthalten, und vor allem dem Acrylnitril oder dem Methacrylnitril,
- den Carbonsäure-Vinylestern, wie dem Vinylacetat, dem Vinylversatat oder dem Vinylpropionat,
- den Vinyl- oder Vinyliden-Halogeniden, zum Beispiel dem Vinylchlorid, dem Vinylfluorid, dem Vinylidenchlorid und dem Vinylidenfluorid, und
- den Dien-Monomeren, beispielsweise dem Butadien oder dem Isopren.

14. Verfahren nach einem der Ansprüche 1 oder 3 bis 13, **dadurch gekennzeichnet, dass** das Monomergemisch A₀ mindestens ein Monomer umfasst, das aus den folgenden Monomeren ausgewählt ist:
Akrylsäure (AA) oder Polyvinylalkohol.

15. Verfahren nach einem der Ansprüche 1 bis 14, **dadurch gekennzeichnet, dass** das Monomer B₁ aus der Vinylphosphonsäure, dem Dimethylester der Vinylphosphonsäure, dem Bis(2-chlorethyl)ester der Vinylphosphonsäure, der Vinyliden-diphosphonsäure, dem Tetraisopropylester der Vinyliden-diphosphonsäure, der alpha-Styrenphosphonsäure oder ihren Gemischen ausgewählt ist.

16. Verfahren nach einem der Ansprüche 1 bis 15, **dadurch gekennzeichnet, dass** das Monomer B₂ aus der Akrylsäure, dem Acrylamid, der Vinylsulfonsäure, dem Vinylacetat, dem Butylacrylat oder ihren Gemischen ausgewählt ist.
